# EUROPÄISCHE PATENTSCHRIFT

(11) **EP 3 750 655 B1**
(45) Veröffentlichungstag und Bekanntmachung des Hinweises auf die Patenterteilung: **28.01.2026**
(21) Anmeldenummer: 19179496.5
(22) Anmeldetag: 11.06.2019
(51) Int. Cl.: B23D 45/00, B23D 47/04, B23D 59/00, B26D 5/00, B23Q 7/04, B26D 7/01, E06B 7/23

(54) **ABLÄNGVORRICHTUNG FÜR AUTOMATISCHE DICHTUNGEN**
CUTTING DEVICE FOR AUTOMATIC SEALS
DISPOSITIF DE COUPE À LA LONGUEUR POUR JOINTS AUTOMATIQUES

(43) Veröffentlichungstag der Anmeldung: 16.12.2020
(73) Patentinhaber: Athmer OHG, 59757 Arnsberg (DE)
(72) Erfinder: ROTHLÜBBERS, Guido, 59759 Arnsberg (DE); TOEPPER, Hubert, 59269 Beckum-Roland (DE)
(74) Vertreter: Fritz Patent- und Rechtsanwälte PartmbB

(56) Entgegenhaltungen:
- DE-A1- 102005 044 496
- DE-U1- 202013 104 777
- US-A1- 2012 060 662

## Beschreibung

Die vorliegende Erfindung betrifft eine Ablängvorrichtung für Dichtungen mit einem Gehäuse, insbesondere für automatische Dichtungen für Türen oder dergleichen.

Dichtungen mit Gehäuse werden in großer Zahl insbesondere an Türen eingesetzt, um einen Spalt zum Beispiel zwischen einem Fußboden und dem unteren Ende eines Türblattes gegen Zugluft, Rauch und/oder Lärm abzudichten. Eine automatische Türdichtung für Türen ist zum Beispiel aus dem Dokument DE 20 2013 104 777 U1 bekannt.

Trotz aller Normung gibt es Türen in unterschiedlichen Breiten. Insbesondere in Altbauten findet man oft Türen mit individuellen Breiten, die keiner der heutigen Normen entsprechen.

Dichtungen mit Gehäusen werden in unterschiedlichen Längen hergestellt. Üblich ist es, die Längen der Dichtungen so zu wählen, dass sie den in den Normen vorgesehen Breiten der Türblätter entsprechen.

Soll nun eine Dichtung mit einem Gehäuse, insbesondere eine automatische Dichtung, an einem Türblatt montiert werden, das eine Breite hat, für die keine Dichtung mit der passenden Länge hergestellt wird, wird von den hergestellten Dichtungen die Dichtung ausgewählt und verwendet, die die nächst größere Länge hat. Die ausgewählte Dichtung wird dann gekürzt, so dass die Länge der Breite des Türblattes entspricht.

Dieses Kürzen der Dichtungen erfolgt derzeit manuell, entweder beim Hersteller der Dichtungen, falls diese entsprechend bestellt werden, in einem Türenwerk oder auf der Baustelle durch den Monteur der Dichtung.

Das Kürzen auf der Baustelle durch einen geschulten Monteur ist dabei eine schnelle Variante, um zu einer ordnungsgemäß funktionierenden und gekürzten Dichtung zu kommen. Allerdings ist nicht gewährleistet, dass jeder Monteur hinreichend geschult ist, das Kürzen fachgerecht vorzunehmen. Daher kann es nach dem Kürzen zu Problemen kommen.

Das Kürzen der Dichtung beim Hersteller ist dagegen zeitaufwändig, insbesondere wenn sich nach der Auslieferung der Dichtung an den Monteur, zum Beispiel bei der geplanten Montage herausstellt, dass die Dichtung gekürzt werden muss.

Auch das Kürzen im Türenwerk ist zeitaufwändig, da das manuelle Kürzen der Dichtungen in einem weitgehend automatisierten Herstellungsprozess störend ist.

Es besteht daher ein Bedarf daran, Dichtungen mit Gehäuse schnell und zuverlässig zu kürzen.

Aus dem Dokument DE 10 2005 044 496 A1 ist eine Ablängvorrichtung für Glasleisten oder entsprechende Stabprofile
- mit einer ersten Spannbaugruppe zum Einspannen eines Gehäuses einer Dichtung im Bereich deren ersten Endes,
- mit einer zweiten Spannbaugruppe zum Einspannen eines Gehäuses einer Dichtung im Bereich deren zweiten Endes und
- mit einer Säge, zum Kürzen des Gehäuses der Dichtung,
- wobei die zweite Spannbaugruppe relativ zur ersten Spannbaugruppe und zur ersten Säge linear verschiebbar ist, bekannt.

Bei Glasleisten handelt es sich um Dichtungen mit einem Halteprofil und einem Dichtungsprofil, die benutzt werden, um Glasscheiben in Fenstern zu halten, wie man es zum Beispiel in der Figur 21 des Dokumentes DE 10 2005 044 496 A1 erkennen kann.

Mit der bekannten Ablängvorrichtung werden das Halteprofil und das Dichtungsprofil in einem Arbeitsgang mit der Säge auf die gewünschte Länge gebracht. Das Halteprofil und das Dichtungsprofil sind dadurch gleich lang.

Bei Dichtungen, die zum Abdichten der sogenannten Bodenluft zwischen einem Türblatt und einem Fußboden verwendet werden können, haben dagegen das Halteprofil und das Dichtungsprofil der Dichtung in der Regel nicht die gleiche Länge. Vielmehr hat das Dichtungsprofil in der Regel einen Überstand über das Halteprofil an dem es befestigt ist. Dieser Überstand sorgt bei geschlossener Tür dafür, dass sich das Dichtungsprofil an den Türrahmen anlegt und so verhindert, dass ein Spalt zwischen der Dichtung und dem Türrahmen bleibt. Das Halteprofil dagegen liegt nicht am Türrahmen an, da das das Öffnen und Schließen der Tür behindern oder sogar verhindern würde.

Das Kürzen einer Dichtung in einem Arbeitsschritt mit nur einer Säge, wie es mit der aus dem Dokument DE 10 2005 044 496 A1 bekannten Ablängvorrichtung vollzogen wird, ist bei einer Dichtung, die zum Abdichten der sogenannten Bodenluft zwischen einem Türblatt und einem Fußboden verwendet werden soll, nicht sinnvoll. Stattdessen könnte man das Kürzen in zwei Arbeitsschritten vollziehen und zunächst entweder in einem ersten Arbeitsschritt das Dichtungsprofil oder das Halteprofil kürzen und dann in einem zweiten Arbeitsschritt das jeweils andere Profil kürzen, wobei dabei Vorkehrungen getroffen werden müssten, in jedem Arbeitsschritt nur eines der Profile zu kürzen.

Aber so ein Vorgehen hat Nachteile, da bei Dichtungen, die zum Abdichten der sogenannten Bodenluft zwischen einem Türblatt und einem Fußboden verwendet werden können, das Halteprofil meist aus Aluminium hergestellt ist, das beim Sägen Späne hinterlässt. Diese Späne haften an der Säge an und können bei einem Schneiden des Dichtungsprofils, das aus einem Elastomer besteht, verschmutzen oder, was noch schlimmer wäre, teilweise oder ganz in das Dichtungsprofil eindringen. Das kann u.a. die Dichtungsfunktion des Dichtungsprofil beeinträchtigen, aber auch zu Kratzern an Teilen führen, die mit dem Dichtungsprofil in Kontakt kommen, so zum Beispiel der Boden oder der Türrahmen.

Diesem Problem haben sich die Erfinder gewidmet.

Diese Aufgabe wird erfindungsgemäß durch eine Ablängvorrichtung gelöst, die eine Schneidbaugruppe zum Schneiden des Dichtungsprofils einer eingelegten Dichtung aufweist.

Eine solche Ablängvorrichtung kann zum Beispiel bei einem Dichtungshersteller, einem Türenwerk oder bei einem anderen Verarbeiter oder einem Großhändler aufgestellt werden, um kurzfristig, schnell und zuverlässig Dichtungen auf ein gewünschtes Maß zu kürzen.

Die Spannbaugruppen können Spannbacken aufweisen, von denen eine erste eine stationäre Spannbacke und eine zweite eine zu dieser bewegliche Spannbacke ist. Die Spannvorrichtungen weisen vorteilhaft je einen Antrieb auf, mit welchem die bewegliche Spannbacke gegen die stationäre Spannbacke bewegt werden kann, um ein Gehäuse Dichtung einer in der Ablängvorrichtung einzuspannen. Der Antrieb kann insbesondere ein elektrischer, ein pneumatischer oder ein hydraulischer Antrieb sein. Die Spannbaugruppen können einen Eingang für eine Energieversorgung des Antriebs aufweisen. Ferner kann ein Eingang zur Verbindung mit einer Steuerung vorgesehen sein, über den die Spannbaugruppen, insbesondere die Bewegung der beweglichen Spannbacke gesteuert wird.

Die Ablängvorrichtung kann so gestaltet sein, dass das Gehäuse unten und das Dichtungsprofil oben liegt.

Die zweite Spannbaugruppe ist relativ zur ersten Spannbaugruppe und zu Säge verfahrbar und kann so auf die gewünschte Länge der Dichtung eingestellt werden, so dass die zu kürzende Dichtung im Bereich ihrer beiden Ende gehalten werden kann. Die zweite Spannbaugruppe kann dazu auf einem Wagen montiert sein oder Teil eines Wagens sein, der linear geführt verschiebbar ist. Dazu kann die Ablängvorrichtung eine Schienenführung oder eine Wellenführung aufweisen. Die Führung kann dazu Schienen bzw. Wellen aufweisen, durch die der Wagen geführt ist. Ferner kann ein Antrieb vorgesehen sein, durch welchen der Wagen verschoben werden kann. Der Antrieb kann eine Spindel umfassen, die von einem Motor angetrieben ist und die mit einer Spindelmutter in dem Wagen zusammenwirken kann. Der Wagen kann mit einer Schleppkette verbunden sein, über welche Leitungen, zum Beispiel Versorgungsleitungen oder Steuerleitungen zu der zweiten Spannbaugruppe oder zu weiteren auf dem Wagen montierten Baugruppen geführt sind.

Eine erfindungsgemäße Ablängvorrichtung kann eine erste Sensorbaugruppe aufweisen, mit welcher die Breite des Gehäuses einer in die Ablängvorrichtung eingelegten Dichtung erfassbar ist. Die Sensorbaugruppe kann einen Sensor aufweisen, der an einer der Spannbacken der ersten oder zweiten Spannbaugruppen angeordnet ist.

Eine erfindungsgemäße Ablängvorrichtung kann einen Anschlag aufweisen, an den ein Gehäuse einer in die Ablängvorrichtung eingelegte Dichtung angelegt wird, um die Position des Gehäuses in der Ablängvorrichtung festzulegen. Der Anschlag ist vorteilhaft auf dem Wagen vorgesehen.

Eine erfindungsgemäße Ablängvorrichtung kann eine zweite Sensorbaugruppe aufweisen, mit welcher die Länge des Gehäuses der in die Ablängvorrichtung eingelegten Dichtung erfasst werden kann, insbesondere wenn das Gehäuse dieser Dichtung an dem Anschlag anliegt.

Die Messung der Länge kann direkt erfolgen oder indirekt.

Bei einer direkten Messung kann die Länge der in die Ablängvorrichtung eingelegten Dichtung unmittelbar erfasst werden.

Eine indirekte Messung kann in der Art erfolgen, dass erfasst wird, wo sich das zu kürzende Ende der Dichtung befindet, wobei vorausgesetzt wird, dass das andere Ende an dem Anschlag anliegt.

Für eine indirekte Messung kann eine zweite Sensorbaugruppe einen Wegsensor und eine Lichtschranke umfassen. Der Wegsensor könnte die Bewegung des Wagens erfassen. Die Lichtschranke könnte im Bereich der ersten Spannvorrichtung oder der Säge vorgesehen sein. Sie ist so angeordnet, dass das Gehäuse eine in die Ablängvorrichtung eingelegten Dichtung erfassen kann, was nachfolgend beschrieben wird.

Zunächst wird in einer bekannten Ausgangsposition des Wagens, in der der Wagen eine bekannte Entfernung zur Lichtschranke hat, eine Dichtung in die Ablängvorrichtung an den Anschlag anliegend eingelegt. Dann kann der Wagen die Dichtung in ihrer Längsrichtung in Richtung auf die Lichtschranke verschieben. Der zunächst noch nicht von der Dichtung abgelenkte Lichtstrahl der Lichtschranke erfasst die Dichtung, sobald diese in den Lichtstrahl geschoben wird. Der von dem Wagen zurückgelegte Weg erlaubt dann eine Berechnung der Länge der eingelegten Dichtung.

Eine erfindungsgemäße Ablängvorrichtung kann eine dritte Sensorbaugruppe aufweisen, mit welcher der Hub im Bereich eines ersten Endes einer in die Ablängvorrichtung eingelegten automatischen Dichtung erfasst werden kann. Eine Ablängvorrichtung kann alternativ oder zusätzlich zur dritten Sensorbaugruppe eine vierte Sensorbaugruppe aufweist, mit welcher der Hub im Bereich eines zweiten Endes einer in die Ablängvorrichtung eingelegten automatischen Dichtung erfasst werden kann. Durch die Erfassung des Hubs, welchen eine automatische Dichtung ausführt, wenn man sie betätigt, kann geprüft werden, ob die Dichtungsleiste der betätigten automatischen Dichtung in einer Position ist, wie es vorgesehen ist. Sollte die Dichtungsleiste einer betätigten Dichtung nicht in der vorgesehen Position sein, kann die Dichtung ausgesondert werden. Sind zwei Sensorbaugruppen vorgesehen, kann zusätzlich ermittelt werden, ob die Dichtungsleiste parallel zum Gehäuse bewegt wird oder ob es zu einer Schrägstellung der Dichtungsleiste zum Gehäuse kommt. Es kann auch ermittelt werden wie stark die Schrägstellung ist. Ist die Schrägstellung bekannt, kann entschieden werden, ob die Schrägstellung toleriert werden kann oder ob die Dichtung wegen einer zu starken Schrägstellung ausgesondert werden muss. Die dritte und/oder die vierte Sensorbaugruppe kann zum Beispiel einen Abstandsensor aufweisen, der über dem Platz angeordnet ist, in dem die Dichtung eingelegt ist.

Eine erfindungsgemäße Ablängvorrichtung kann eine Betätigungsbaugruppe aufweisen, mit welcher eine in die Ablängvorrichtung eingelegte automatische Dichtung betätigt werden kann. Eine Betätigung der automatischen Dichtung ist zum Beispiel notwendig, um den Hub zu ermitteln, den die Dichtungsleiste der Dichtung ausführt. Eine Betätigung ist auch sinnvoll, um eine Funktionsprüfung der Dichtung durchzuführen. Die Betätigungsbaugruppe kann einen Linearantrieb, zum Beispiel einen Pneumatikzylinder aufweisen, der mit einem Stift verbunden ist. Der Stift kann durch den Antrieb auf einen Auslöser der eingelegten automatischen Dichtung drücken, um diese zu betätigen. Der Linearantrieb könnte auch mit einem Ziehelement verbunden sein, mit dem an dem Auslöser gezogen werden kann, wenn die eingelegte automatische Dichtung eine Dichtung mit Zugauslösung ist und nicht mit Druckauslösung ist. Die Betätigungsbaugruppe kann einen Eingang für eine Energieversorgung des Antriebs aufweisen. Ferner kann ein Eingang zur Verbindung mit einer Steuerung vorgesehen sein, über die die Betätigungsbaugruppe, insbesondere die Bewegung des Stiftes oder Zugelementes gesteuert wird. Vor der Betätigung der Dichtung wird diese vorzugsweise mittels der ersten und/oder zweiten Spannbaugruppe eingespannt.

Eine erfindungsgemäße Ablängvorrichtung kann eine Positionsbaugruppe aufweisen, mit welcher eine Dichtungsleiste einer in die Ablängvorrichtung eingelegten automatischen Dichtung relativ zu deren Gehäuse positioniert werden kann. Das ist sinnvoll, da es Dichtungen gibt, deren Dichtungsleiste in der Längsrichtung zum Beispiel aus konstruktiven Gründen in geringem Maße zum Dichtungsgehäuse verschiebbar ist. Damit bei einer solchen automatischen Dichtung die Dichtungsleiste, insbesondere die Halteleiste, die das Dichtungsprofil hält und über einen Bewegungsmechanismus mit dem Gehäuse verbunden ist, an einer gewünschten Stelle gekürzt wird, ist es wichtig die Dichtungsleiste relativ zum Gehäuse in die gewünschte Position zu bringen und dort zu halten.

Eine erfindungsgemäße Ablängvorrichtung kann eine Abzieh- und Aufziehbaugruppe aufweist, mit welcher ein Dichtungsprofil von der übrigen eingelegten Dichtung zumindest teilweise abgezogen und aufgezogen werden kann. Das kann notwendig sein, wenn das Dichtungsprofil getrennt von dem Gehäuse oder dem Gehäuse und der Halteleiste gekürzt werden soll.

Eine erfindungsgemäße Ablängvorrichtung kann einen Drucker aufweisen, mit welchem das Gehäuse einer eingelegten Dichtung bedruckt werden kann, zum Beispiel um die Dichtung zu kennzeichnen.

Eine erfindungsgemäße Ablängvorrichtung kann eine Schneidbaugruppe zum Schneiden des Dichtungsprofils einer eingelegten Dichtung aufweisen. Dann kann das Dichtungsprofil ggf. getrennt von dem Gehäuse oder dem Gehäuse und der Halteleiste gekürzt werden.

Eine erfindungsgemäße Ablängvorrichtung kann eine dritte Spannbaugruppe aufweisen, mit der das Gehäuse einer eingelegten Dichtung einspannt werden kann. Anders als die erste und zweite Spannbaugruppe kann mit der dritten Spannbaugruppe das Gehäuse vorteilhaft in vertikaler Richtung einspannt werden. Vorzugsweise weist die dritte Spannbaugruppe einen geschlitzten Stempel auf, der, beidseitig der Stelle, an welcher das Gehäuse gekürzt wird, von oben das Gehäuse gegen ein Bett drückt, auf dem das Gehäuse aufliegt. Das Sägeblatt kann dann beim Kürzen von unten in den Schlitz des Stempels eindringen. So kann bei einem von unten arbeitenden Sägeblatte das Gehäuse unmittelbar im Bereich der Schnittstelle bzw. des Sägeblattes eingespannt werden.

Eine erfindungsgemäße Ablängvorrichtung kann eine Anzeige- und Bedienbaugruppe aufweisen.

Eine erfindungsgemäße Ablängvorrichtung kann eine Steuerung aufweisen, welche mit den übrigen Baugruppen verbunden ist, um von diesen Sensorsignale zu empfangen und/oder an die Steuerungssignale zu übermitteln.

Eine in eine erfindungsgemäße Ablängvorrichtung eingelegte Dichtung, insbesondere einer automatischen Dichtung, kann mit einem Verfahren umfassend folgende Schritte gekürzt werden:
- Einstellen des Abstandes der zweiten Spannbaugruppe von der ersten Spannbaugruppe und der Säge,
- Einspannen des Gehäuses der Dichtung mittels der ersten Spannbaugruppe und der zweiten Spannbaugruppe und
- Sägen der Dichtung mittels der Säge.

Vor dem Sägen kann die Dichtung mittels zumindest einer der Sensorbaugruppen vermessen werden. Außerdem kann vor dem Sägen eine Funktionsprüfung durchgeführt werden. Auch während der Funktionsprüfung können Messungen vorgenommen werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

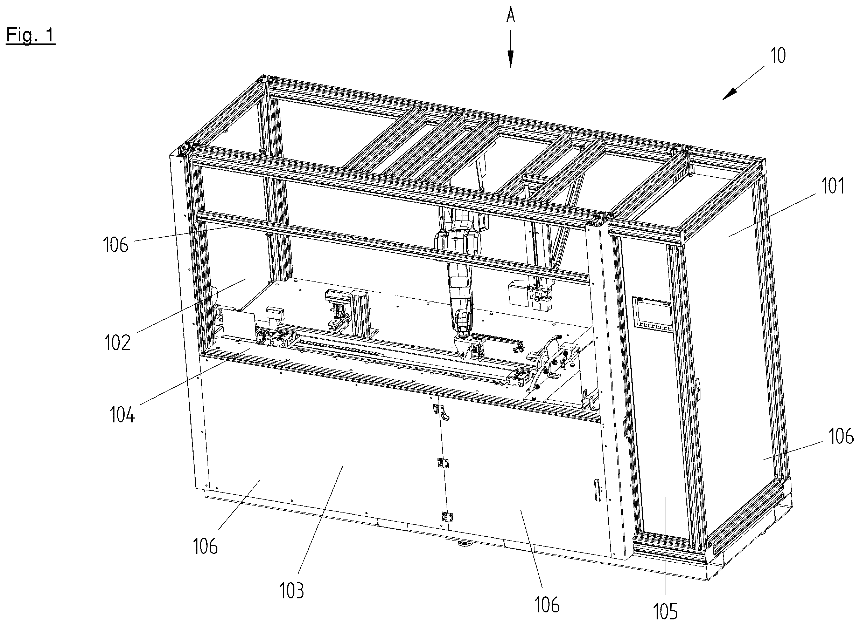

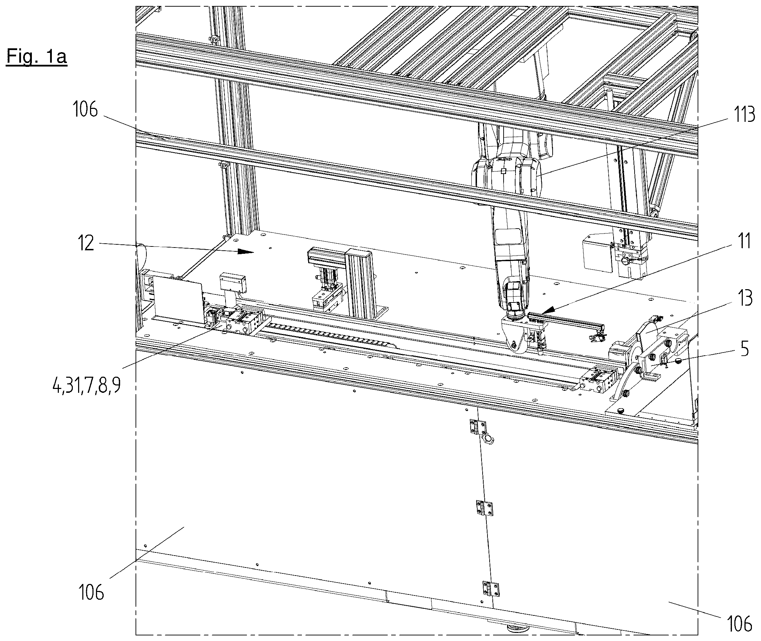

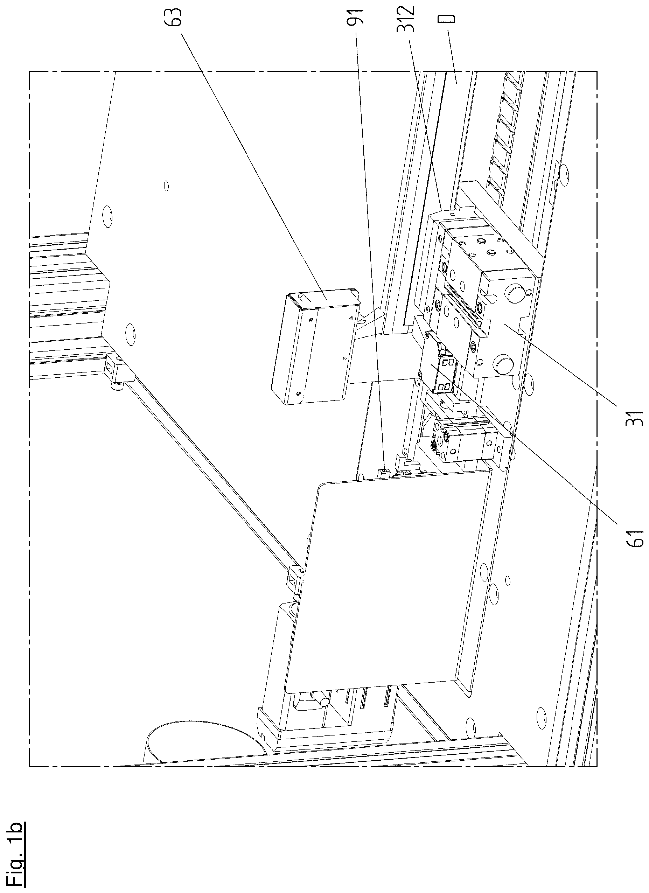

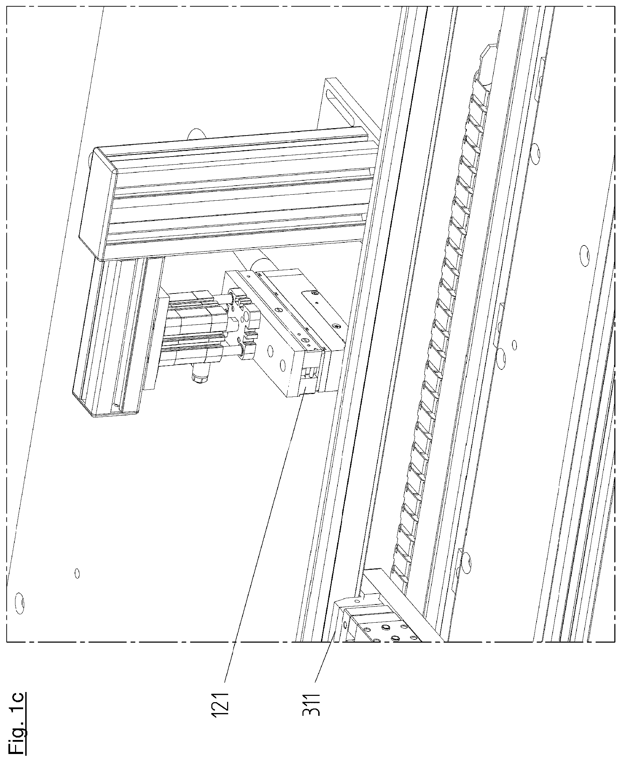

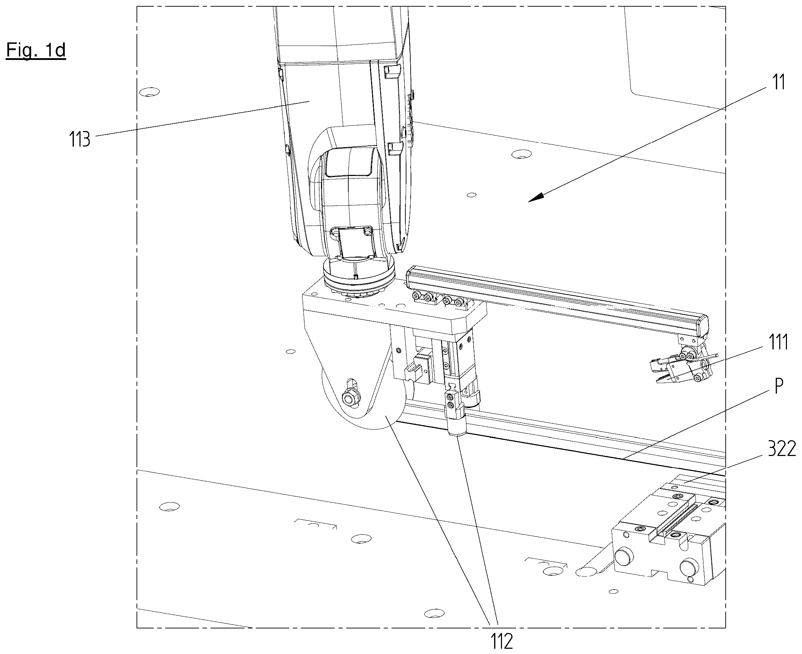

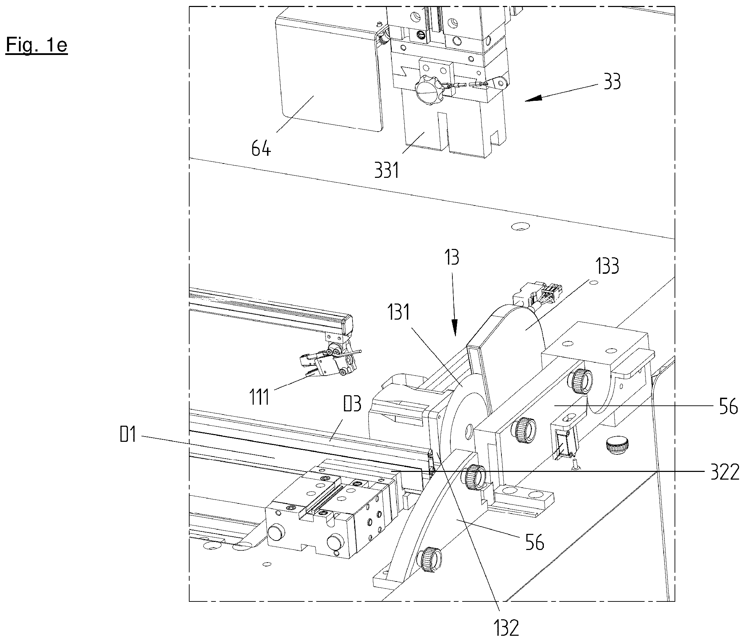

- Fig. 1: eine Ansicht der Ablängvorrichtung mit eingelegter Dichtung aus der Vogelperspektive,
- Fig. 1a: einen vergrößerten Ausschnitt aus Fig. 1,
- Fig. 1b: einen ersten vergrößerten Ausschnitt aus Fig. 1a, jedoch ohne Dichtung,
- Fig. 1c: einen zweiten vergrößerten Ausschnitt aus Fig. 1a, jedoch ohne Dichtung,
- Fig. 1d: einen dritten vergrößerten Ausschnitt aus Fig. 1a, jedoch ohne Dichtung,
- Fig. 1e: einen vierten vergrößerten Ausschnitt aus Fig. 1a, jedoch ohne Dichtung,

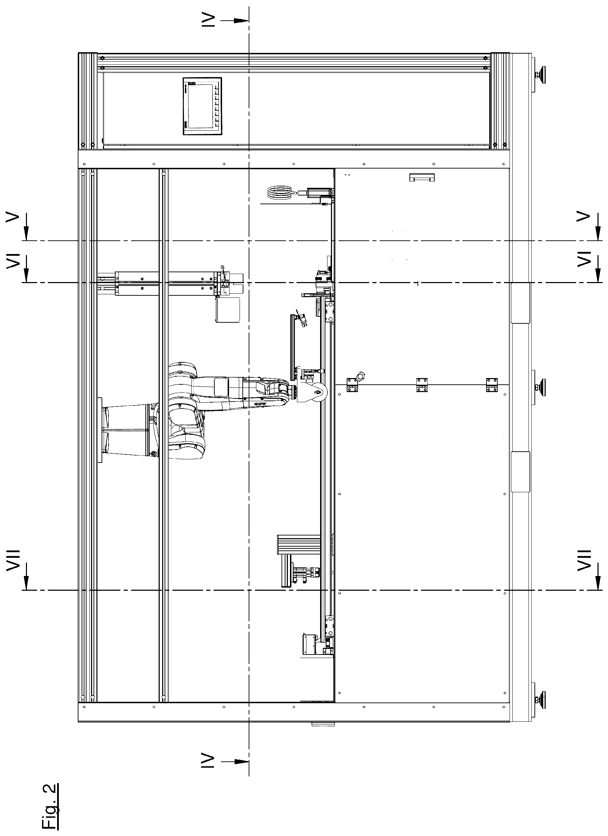

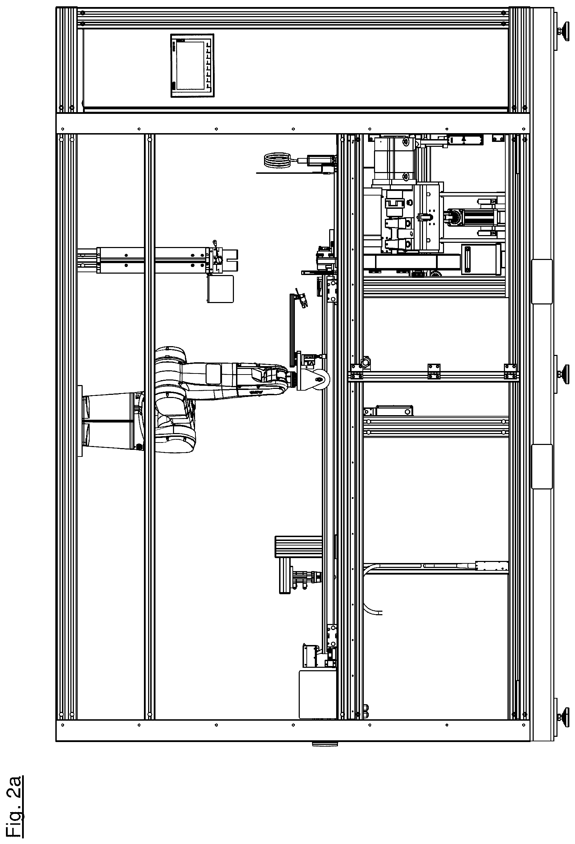

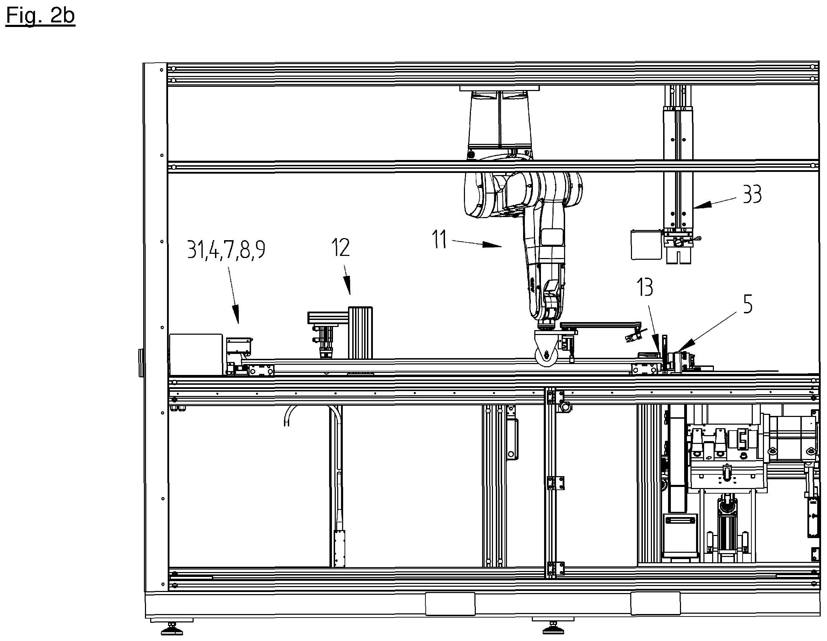

- Fig. 2: eine Frontansicht der Ablängvorrichtung mit eingelegter Dichtung,
- Fig. 2a: eine Frontansicht der Vorrichtung mit eingelegter Dichtung und mit teilweise entfernten Türen,
- Fig. 2b: einen vergrößerten Ausschnitt aus Fig. 2a,

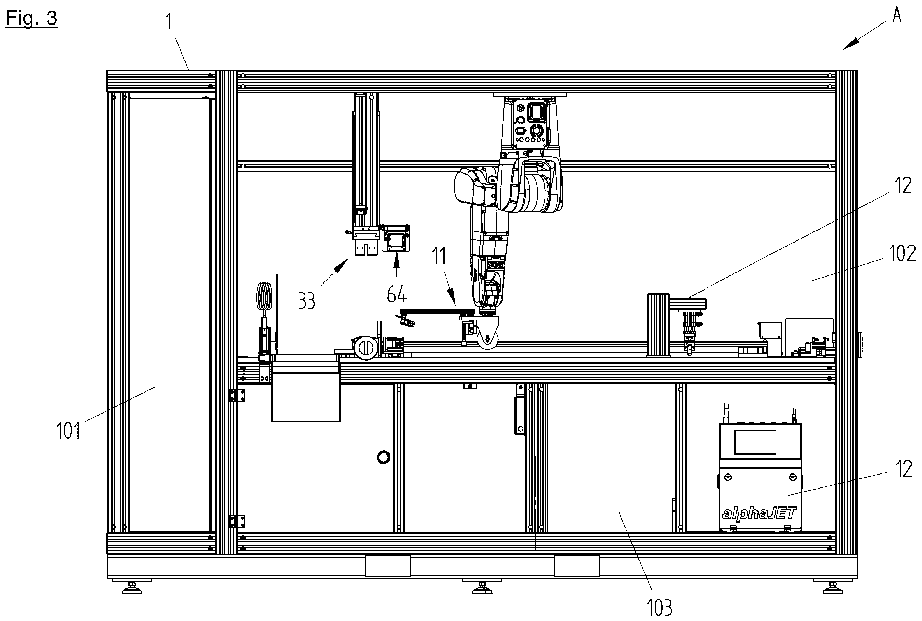

- Fig. 3: eine Rückansicht der Ablängvorrichtung mit teilweise entfernter Rückwand,

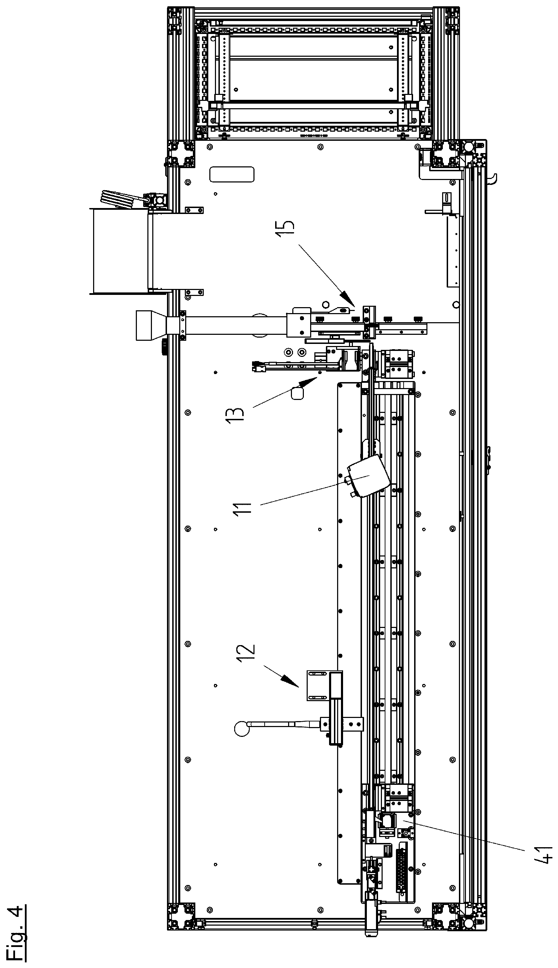

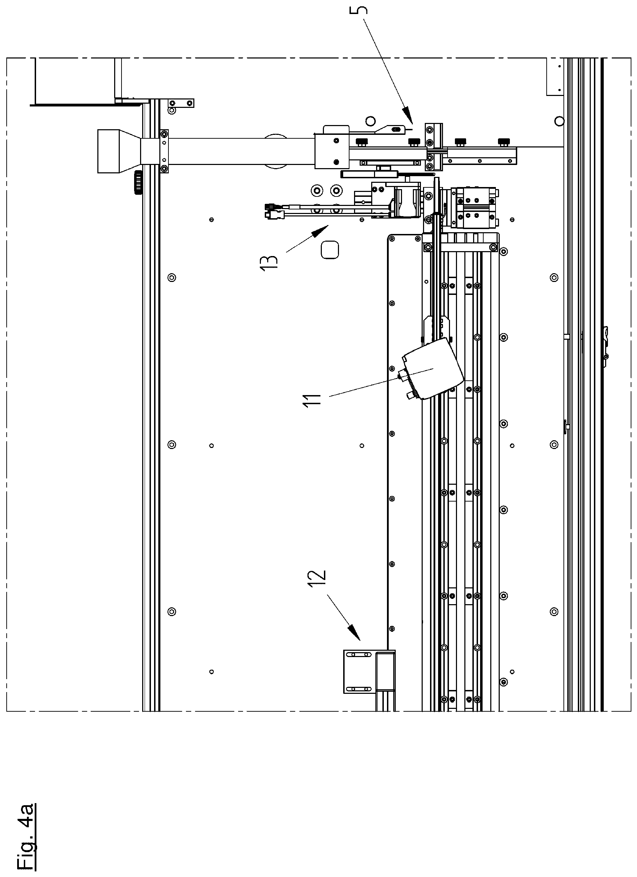

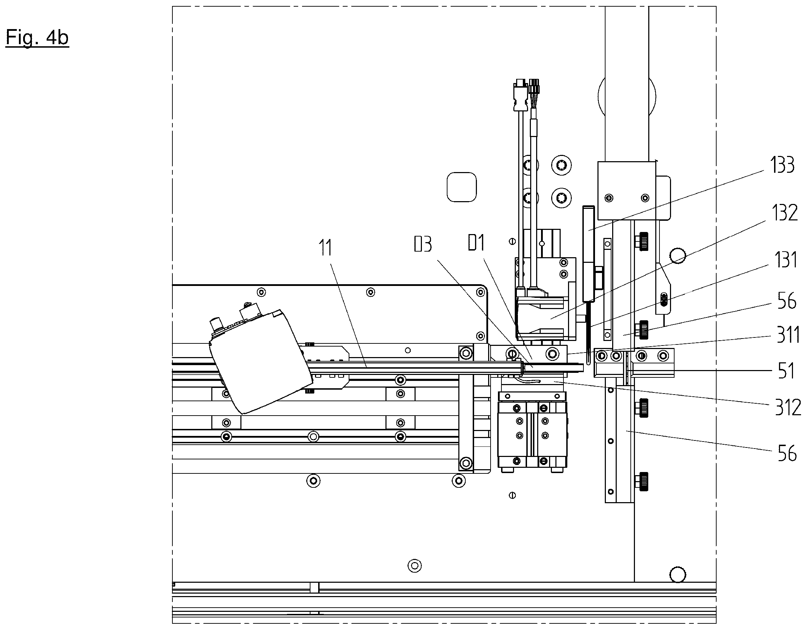

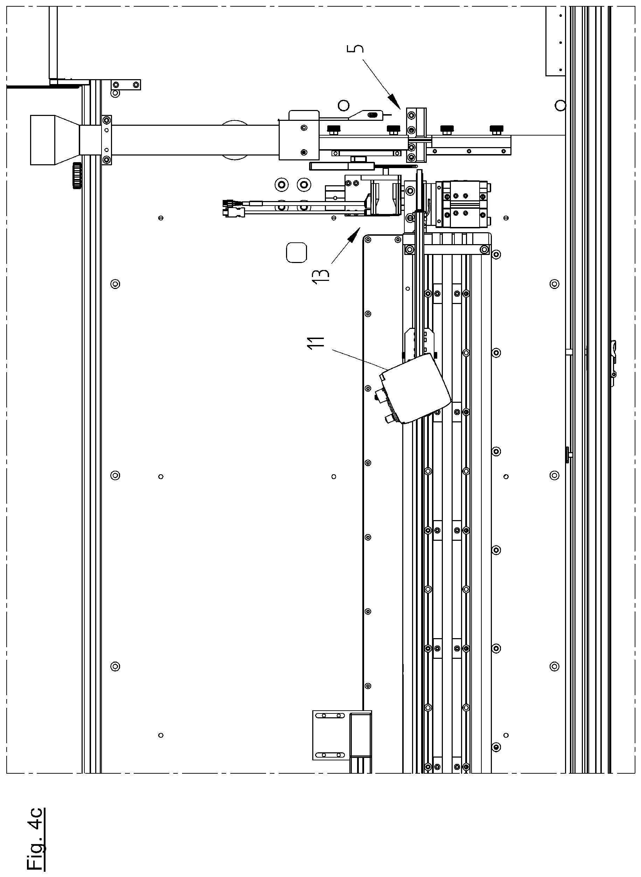

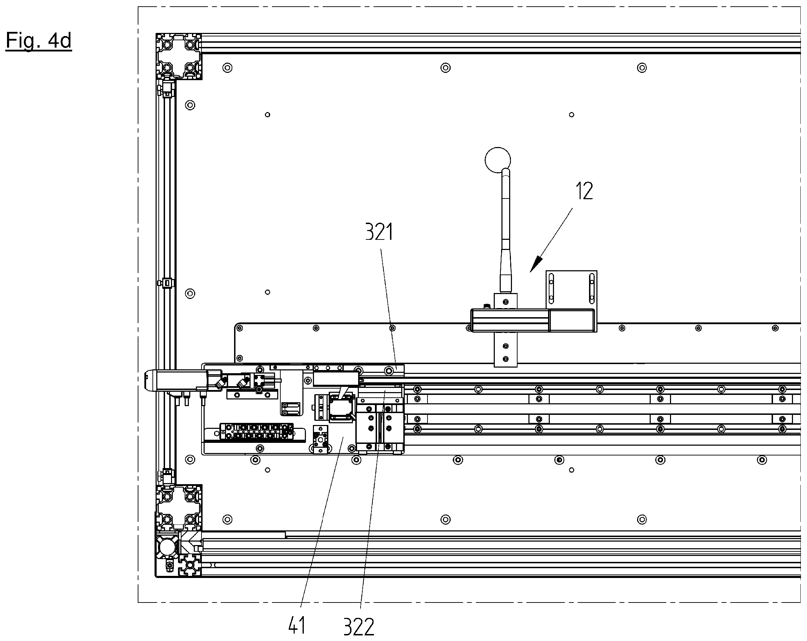

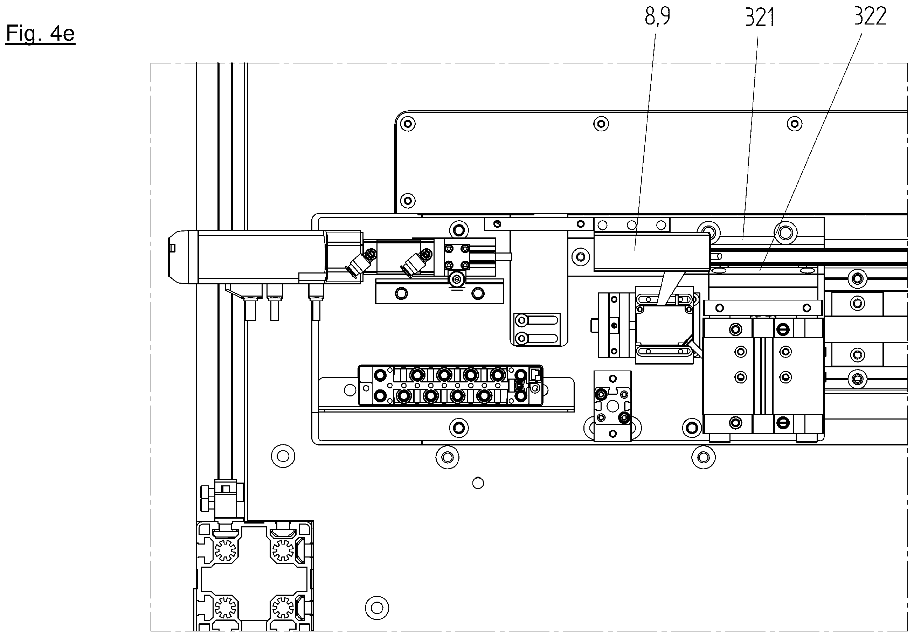

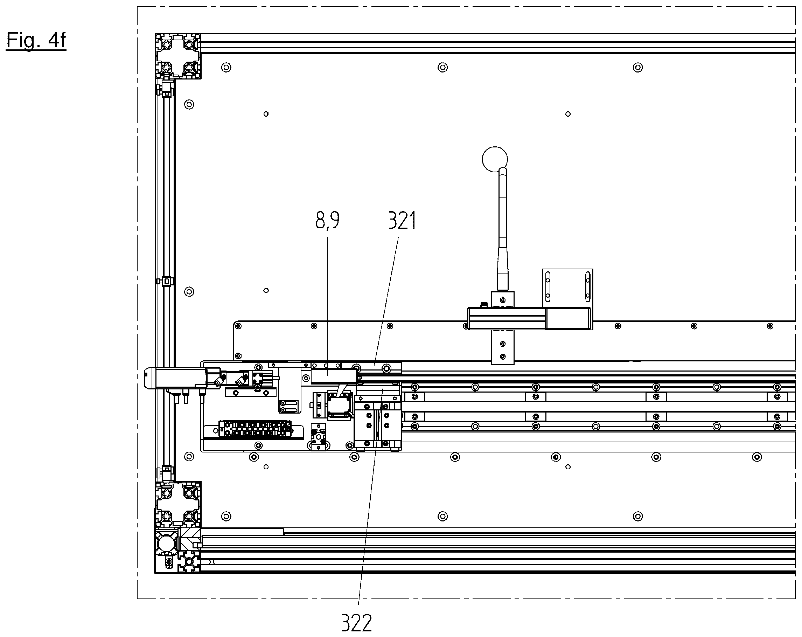

- Fig. 4: einen horizontalen Querschnitt entlang der Linie IV-IV in Fig. 2,
- Fig. 4a: einen ersten vergrößerten Ausschnitt aus Fig. 4,
- Fig. 4b: einen vergrößerten Ausschnitt aus Fig. 4a,
- Fig. 4c: den ersten vergrößerten Ausschnitt nach Fig. 4a jedoch ohne Dichtung,
- Fig. 4d: einen zweiten vergrößerten Ausschnitt aus Fig. 4,
- Fig. 4e: einen vergrößerten Ausschnitt aus Fig. 4d,
- Fig. 4f: den ersten vergrößerten Ausschnitt nach Fig. 4d jedoch ohne Dichtung,

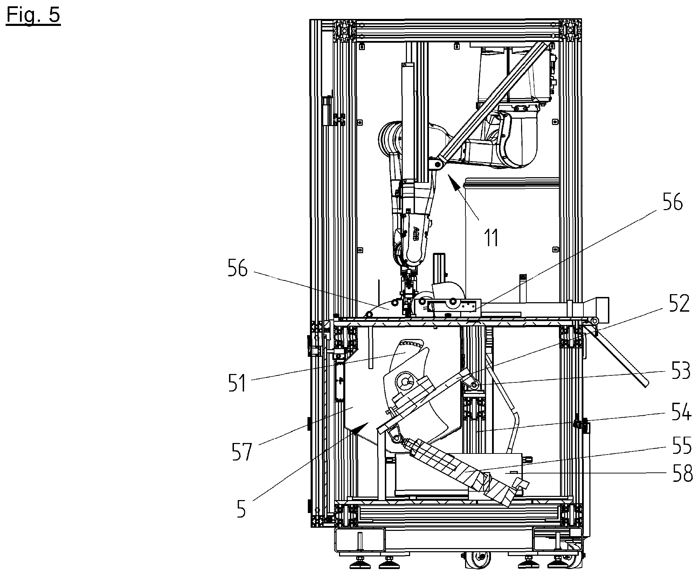

- Fig. 5: einen Schnitt entlang der Linie V-V in Fig. 2,

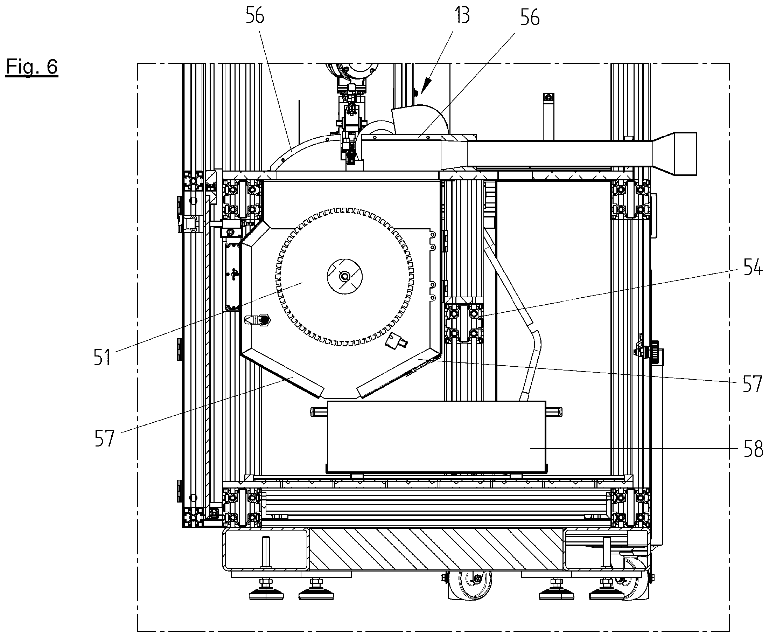

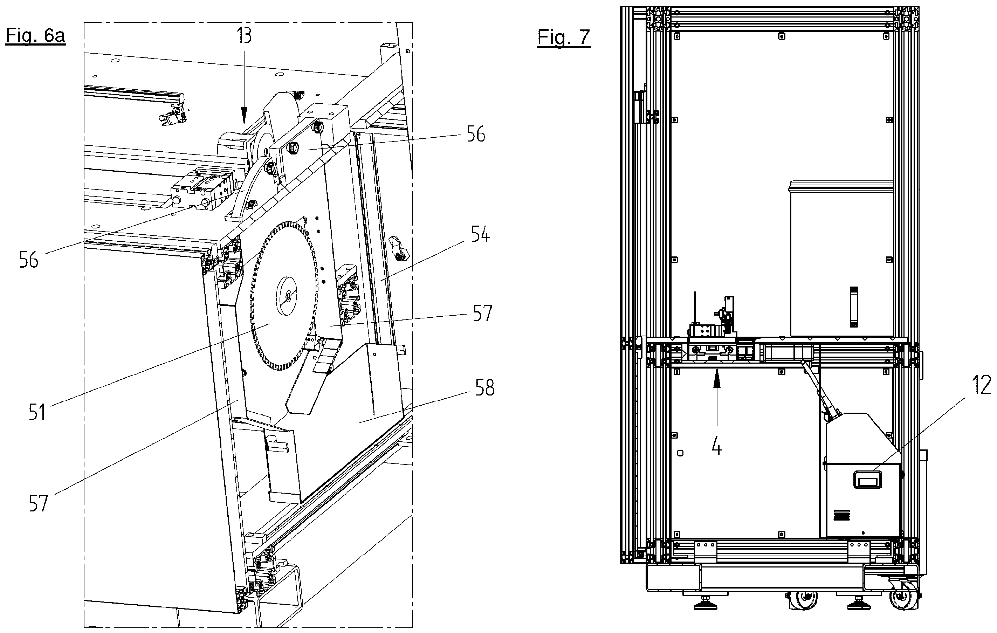

- Fig. 6: einen Schnitt entlang der Linie VI-VI in Fig. 2,
- Fig. 6a: eine perspektive Ansicht des Schnitts gemäß Fig. 6,

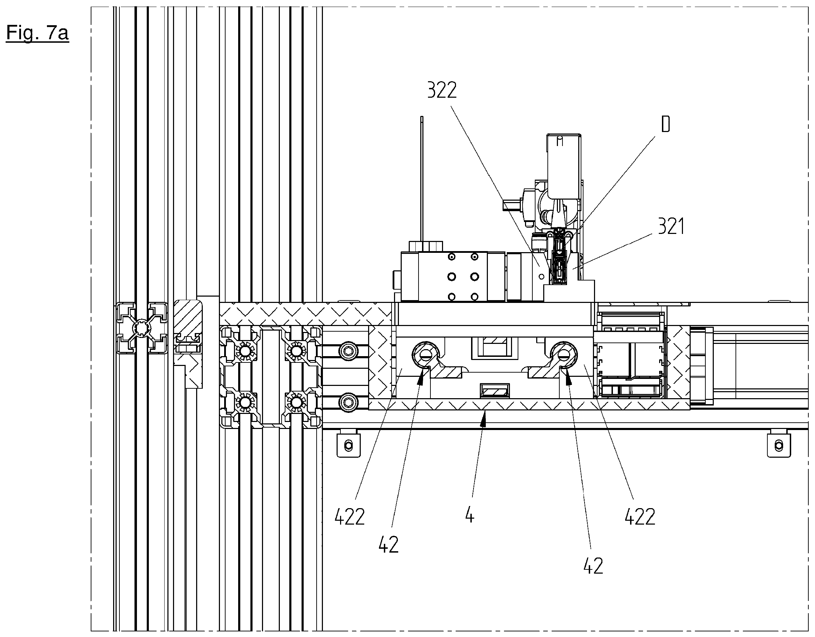

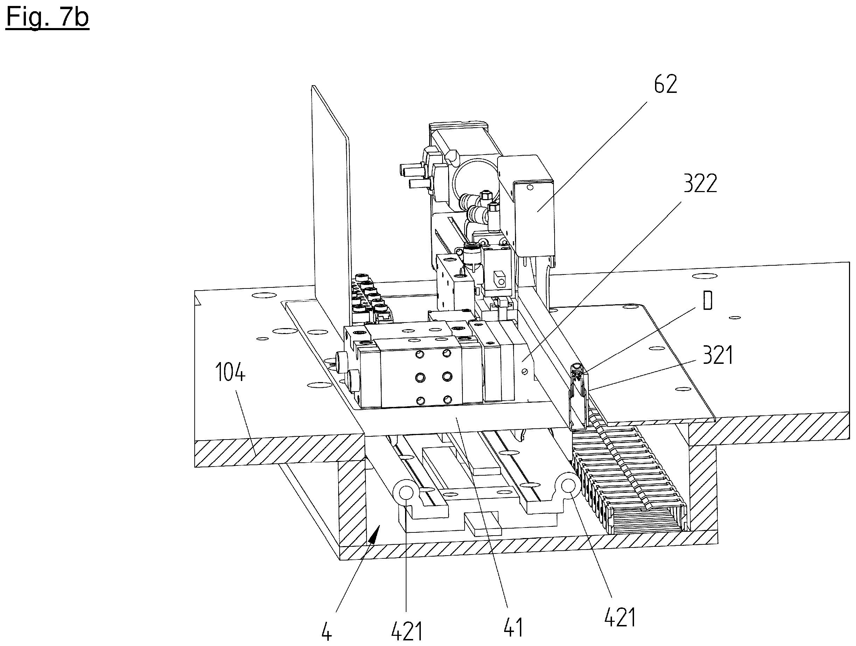

- Fig. 7: einen Schnitt entlang der Linie VII - VII in Fig. 2,
- Fig. 7a: einen vergrößerten Ausschnitt aus Fig. 7 und
- Fig. 7b: eine perspektivische Ansicht des Schnitts aus Fig. 7a.

Die Ablängvorrichtung A dient dazu automatische Dichtungen D zu kürzen.

Die automatischen Türdichtungen D werden dazu in die erfindungsgemäßen Ablängvorrichtung A eingelegt. Dort werden sie eingespannt und gekürzt. Vorzugsweise wird die Dichtung D nach dem Einspannen vermessen und einer Funktionsprüfung unterzogen, nachdem sie eingespannt worden ist und bevor sie geschnitten wird. Je nach Dichtung D kann es notwendig sein, dass ein Außenprofil oder Gehäuse D1 der Dichtung und ein Innenprofil oder eine Halteschiene D2 der Dichtung getrennt vom Dichtungsprofil D3 der Dichtung geschnitten werden. Dann müssen zumindest in dem Bereich der Dichtung D, in dem diese gekürzt werden soll, dass Dichtungsprofil D3 und die Halteschiene D2 bzw. das Gehäuse D1 voneinander getrennt werden, bevor sie getrennt voneinander gekürzt werden. Nach dem Kürzen müssen dann das Dichtungsprofil D3 und die Halteschiene D2 wieder zusammengefügt werden. Manche Dichtungen D müssen im betätigten Zustand gekürzt werden, andere dagegen im nicht betätigten Zustand. Ferner kann es sein, dass die Halteschiene D2 und das Gehäuse D1 beim Kürzen eine bestimmte Position zueinander haben müssen. Außerdem kann es gewünscht sein, dass die gekürzte Dichtung D beschriftet wird. Anschließend kann die Dichtung D erneut einer Funktionsprüfung unterzogen werden und vermessen werden, bevor sie dann wieder aus der Ablängvorrichtung A entnommen wird.

Für diese vorstehend kurz beschriebenen Tätigkeiten weist die Ablängvorrichtung A verschiedenen Baugruppen 2, 3, 4, 5, 6, 7, 8, 9, 10 auf. Einige dieser Baugruppen sind bei der Ablängvorrichtung A optional vorgesehen und können bei einer erfindungsgemäßen Vorrichtung auch entfallen. Manche Baugruppen können auch unabhängig von der Aufgabe des Kürzens verwendet werden, zum Beispiel bei der Herstellung von automatischen Dichtungen D. Einige Baugruppen könnten auch an anderen Vorrichtungen vorgesehen sein.

Die Ablängvorrichtung A umfasst einen Maschinenschrank 10 mit mehreren Schrankabteilen 101, 102, 103. In einem Schrankabteil 101 sind Steuerungsbaugruppen angeordnet, mit denen die übrigen Baugruppen der Vorrichtung A gesteuert oder geregelt werden können. Der Schrank 10 umfasst auch einen Arbeitstisch 104, der ein Schrankabteil 102 über dem Arbeitstisch 104, das einen Arbeitsraum 102 bildet, von einem Schrankabteil 105 unter dem Arbeitstisch trennt. Sowohl im Arbeitsraum 102 als auch in dem Schrankabteil 105 unter dem Arbeitstisch 104 sind Baugruppen oder Teile von Baugruppen der Ablängvorrichtung A vorgesehen.

Die Schrankabteile 101, 102, 103 sind durch Seitenwände 105, Rückwände 105, Wände 105 auf der Vorderseite und/oder Türen voneinander und von der Umgebung getrennt. Die Türen lassen sich öffnen, insbesondere die Tür 106 zum Arbeitsraum. Ist die Tür 106 zum Arbeitsraum geöffnet kann eine gekürzte Dichtung D aus dem Arbeitsraum 102 entnommen werden und eine zu kürzende Dichtung in den Arbeitsraum 102 eingebracht werden. Die Tür zum Arbeitsraum 102 ist eine Hubtür 106, die zum Öffnen nach unten verschoben werden kann, vor das Schrankabteil 103 unter dem Arbeitstisch 104. Das Schrankabteil 103 unter dem Arbeitstisch 104 und das Schrankabteil 101 für die Steuerungsbaugruppen weisen Flügeltüren auf. Diese sind für das Schrankabteil 103 unter dem Arbeitstisch 104 auf der Vorderseite und für das Schrankabteil 101 mit dem Steuerungsbaugruppen auf der Seite vorgesehen.

In der Wand auf der Vorderseite des Schrankabteils 101 ist eine Anzeige- und Bedienbaugruppe 2 für die Steuerungsbaugruppen angeordnet, über die die Ablängvorrichtung A eingerichtet und eingestellt und bedient werden kann. Über die Anzeige- und Bedienbaugruppe 2 können Zustände von Baugruppen oder der Zustand der Vorrichtung A insgesamt angezeigt und eingestellt werden.

Auf dem Arbeitstisch ist eine erste Spannbaugruppe 31 vorgesehen, mit welcher die Dichtung D im Bereich des zu kürzenden Endes eingespannt werden kann. Diese erste Spannbaugruppe 31 weist eine stationäre Spannbacke 311 und eine bewegliche Spannbacke 312 auf, zwischen denen das Gehäuse D1 der Dichtung D1 eingespannt werden kann. Die Figuren zeigen die erste Spannbaugruppe 31 mit geöffneten Spannbacken 311, 312, zwischen denen eine Dichtung D in die erste Spannbaugruppe 31 eingelegt oder aus der ersten Spannbaugruppe 31 entnommen werden kann.

Eine zweite Spannbaugruppe 32 zum Spannen der Dichtung D ist linear verschiebbar auf einem Wagen 41 angeordnet. Der Wagen 41 ist in einem Schlitz des Arbeitstisches 14 mit Hilfe einer Wellenführung 42 verschiebbar. Unter dem Arbeitstisch 14 sind Führungswellen 421 angeordnet, die mit Linearlager 422 am Wagen 41 zusammenwirken. Ferner ist ein Antrieb 43 zum Bewegen des Wagens 41 vorsehen.

Auch die zweite Spannbaugruppe 32 weist eine stationäre Spannbacke 321 und eine bewegliche Spannbacke 322 auf, zwischen denen das Gehäuse D1 der Dichtung D eingespannt werden kann.

Die Figuren zeigen die erste Spannbaugruppe 31 und die zweite Spannbaugruppe 32 mit geöffneten Spannbacken 311, 312, 321, 322, zwischen denen eine Dichtung in die erste und die zweite Spannbaugruppe 31, 32 eingelegt oder aus der ersten und der zweiten Spannbaugruppe 31, 32 entnommen werden kann.

Eine dritte Spannbaugruppe 33 ist in der Nähe der ersten Spannbaugruppe 31 angeordnet. Die dritte Spannbaugruppe 33 hat einen bewegliche Stempel 331, die von oben auf ein aus der ersten Spannbaugruppe 31 herausragendes Ende einer Dichtung D abgesenkt werden kann und dieses gegen den Arbeitstisch 14 drückt. Der Stempel hat einen Schlitz, durch den ein Sägeblatt 51 einer Säge 5 geführt werden kann. Mit der dritten Spannbaugruppe 33 kann verhindert werden, dass während des Kürzens das bearbeitete oder zu bearbeitende Ende der Dichtung D in störende Vibrationen versetzt wird.

Sowohl im Bereich der ersten Spannbaugruppe 31 als auch im Bereich der zweiten Spannbaugruppe 32 sind verschiedene Sensorbaugruppen 6 vorgesehen. Mit einer ersten Sensorbaugruppe 61, die auf dem Wagen angebracht ist, kann die Breite der eingelegten Dichtung D gemessen werden. Über eine zweite Sensorbaugruppe 62 im Bereich der ersten Spannbaugruppe kann die Länge der Dichtung erfasst werden, die dazu aber im Bereich der zweiten Spannbaugruppe 32 an einem Anschlag 7 anliegen muss.

Mit einer dritten und einer vierten Sensorbaugruppe 63, 64 kann der Hub erfasst werden, der mit einer Dichtung D erreicht werden kann, wenn diese ausgelöst wird. Die dritte Sensorbaugruppe 63 ist im Bereich der ersten Spannbaugruppe 31 angeordnet und die vierte Sensorbaugruppe 64 ist im Bereich der zweiten Spannbaugruppe 32 auf dem Wagen 41 angeordnet. Durch eine Auswertung der von der dritten und der vierten Sensorbaugruppe 63, 64 gelieferten Werte des Hubs, der an den verschiedenen Ende der Dichtung D unterschiedlich sein kann, kann ermittelt werden, ob die Dichtungsleiste D2, D3 der Dichtung D im ausgelösten Zustand hinreichend parallel zum Gehäuse D1 der Dichtung D ist. Bei einer zu großen Abweichung von einem vorgegebenen Wert kann die Dichtung D ausgesondert werden.

Das Auslösen der Dichtung D zum Messen des Hubs, aber auch zum Durchführen eines Funktionstests kann per Hand erfolgen. Einfacher ist es allerdings die Dichtung mittels einer Betätigungsbaugruppe 8 auszulösen. Diese ist im Bereich der zweiten Spannbaugruppe 32 auf dem Wagen 41 angeordnet. Die Betätigungsbaugruppe 8 weist einen mit einem Antrieb verbundenen Stift 81 auf, der mittels des Antriebs gegen einen Auslöser D4 der Dichtung D gedrückt werden kann. Es ist möglich, dass die Betätigungsbaugruppe 8 dafür eingerichtet ist, eine durch Zug auslösbare Dichtung zu betätigen. Die Betätigungsbaugruppe 8 muss dann ein Element aufweisen, mittels dem an dem Auslöser gezogen werden kann.

Ferner weist die in den Figuren dargestellte Ablängvorrichtung A eine Positionsbaugruppe 9 auf. Diese hat ähnlich wie die Betätigungsbaugruppe einen mit einem Antrieb verbunden Stift 91 auf, mit dem bei betätigter oder nicht betätigter Dichtung D die Dichtungsleiste gegenüber dem Gehäuse D1 verschoben und positioniert werden kann.

Die in den Figuren dargestellte Ablängvorrichtung A weist auch eine Abzieh- und Aufziehbaugruppe 11 auf, mit der ein Dichtungsprofil D3 der Dichtung D von einer Halteleiste D2 zumindest teilweise abgezogen werden kann, damit die Halteleiste D2 und das Dichtungsprofil D3 getrennt voneinander gekürzt werden können. Das kann zum Beispiel sinnvoll sein, wenn das Dichtungsprofil D3 einen Überstand gegenüber der Halteleiste D2 und dem Gehäuse D1 haben soll. Das Dichtungsprofil D3 kann dann weniger gekürzt werden als das Gehäuse D1 und die Halteleiste D2. Ein anderer Grund für ein getrenntes Kürzen von Dichtungsprofil D3 auf der einen Seite und dem Gehäuse D1 und der Halteleiste D2 auf der anderen Seite kann darin liegen, dass für beides unterschiedliche Werkzeuge notwendig sind.

Die Abzieh- und Aufziehbaugruppe 11 umfasst ein Greifmittel 111, Rollen und Scheiben 112, die an einem Mehrachsen-Robotor 113 befestigt sind. Mit dem Greifmittel 111 , dass einer Zange ähnlich ist, kann insbesondere bei betätigter Dichtung D das Dichtungsprofil D3 an einem Ende der Dichtung D ergriffen werden und eine Bewegung des Greifmittels 111 in Richtung des anderen Endes der Dichtung D von der Halteleiste D2 abgezogen werden.

Die Rollen und Scheiben 112 dienen dazu, das Dichtungsprofil D3 wieder an der Halteleiste D2 der betätigten Dichtung D zu befestigen. Die Rollen 112 fahren dazu entlang der Dichtung D und Drücken vorspringende Haltestrukturen des Dichtungsprofils D3 in Aufnahmekanäle der Halteleiste D2. Die Scheiben 112 sorgen dafür, dass dabei die Ränder der Dichtung D innerhalb des Gehäuses D1 der Dichtung D kommen, so dass das Dichtungsprofil D3 bei einer Entlastung des Betätigungsmechanismus der Dichtung D4, also dem Wechsel von einem betätigten Zustand der Dichtung D in einen nicht betätigten Zustand der Dichtung D die Dichtleiste D2, D3 ohne durch das Dichtungsprofil D3 verursachte Probleme wieder in das Gehäuse D1 gezogen werden kann.

Ferner ist zwischen den Spannbaugruppen ein Druckkopf 121 eines Druckers 12 vorgesehen, mit dem etwas, zum Beispiel einer Beschriftung, auf das Gehäuse D1 der Dichtung D gedruckt werden kann. Es kann sich dabei um eine Beschriftung handeln, aus der die Länge der gekürzten Dichtung D hervorgeht.

Auf dem Arbeitstisch ist im Bereich der ersten Spannbaugruppe 31 eine Schneidbaugruppe 13 vorgesehen. Mit dieser kann ein von der Halteleiste D2 getrenntes Dichtungsprofil D3 geschnitten werden. Die Schneidbaugruppe 13 hat einen Antrieb und ein drehbares Messer 131, das von dem Antrieb in Rotation versetzt werden kann. Der Antrieb ist auf einem Schlitten 132 angebracht, der quer zu dem Schlitz in dem Arbeitstisch verfahrbar ist. Die Schneidbaugruppe 13 weist auch eine Abdeckung 133 auf. In einer Parkposition des verschiebbaren Antriebs, ist das drehbare Messer 131 in der Abdeckung 133 angeordnet. Wird das Messer 131 dagegen zum Schneiden verwendet, kann der Schlitten 132 mit dem Antrieb so verfahren werden, dass das drehbare Messer 131 in eine Arbeitsposition kommt, in der mit dem Messer 131 das Dichtungsprofil D3 geschnitten werden kann. Vorzugsweise ist die Abdeckung 133 schwenkbar an dem Arbeitstisch 104 angebracht und mit dem Schlitten 132 in der Art gekoppelt, dass sobald der Schlitten 132 in die Arbeitsposition gefahren wird, die Abdeckung 133 wegklappt, so dass das drehbare Messer 131 freigegeben wird.

In dem Schrankabteil unter dem Arbeitstisch 104 ist eine Kreissäge 5 schwenkbar angeordnet. Die Kreissäge 5 ist dazu auf einem Schwenktisch 52 angeordnet, der über zwei Schwenklager 53 an einem Teil eines Gestells 54 in der Vorrichtung A schwenkbar gelagert ist. Über einen Linearantrieb 55 kann der Schwenktisch 52 zum Beispiel zum Kürzen einer Dichtung nach oben geschwenkt werden. Ein Teil eines Sägeblatts 51 der Kreissäge 5 durchdringt in seiner nach oben geschwenkten Stellung von unten einen Schlitz im Arbeitstisch 104, so dass eine auf oder über dem Arbeitstisch 104 angeordnete Dichtung mittels des Sägeblattes 51 gekürzt werden kann. In der Zeichnung ist die Kreissäge 5 im abgesenkten Zustand dargestellt.

Auf dem Arbeitstisch 104 sind Abdeckungen 56 vorgesehen, welche das Sägeblatt 51 abdecken und so verhindern, dass Gegenstände oder gar Körperteile versehentlich in den Bereich des Sägeblatts 51 kommen. Lediglich der Bereich, in dem das Sägeblatt 51 die Dichtung D kürzt, bleibt frei von den Abdeckungen 56. Auch unter dem Arbeitstisch 104 ist eine Abdeckung 57 vorgesehen, die das Sägeblatt 51 abdeckt. Die Abdeckung 57 unter dem Arbeitstisch 104 hat einen geteilten Boden. Zwei Bodenteile des geteilten Bodens stehen in einem Winkel von 80° bis 110° Grad zueinander. Zwischen ihnen ist ein Schlitz vorgesehen, durch den Späne in einen unter dem Schlitz angeordneten Auffangbehälter 58 hineinfallen können.

Mit der Kreissäge 51 können das Gehäuse D1 und die Halteschiene D2 und je nach Ausführung der Dichtung oder Einstellung der Ablängvorrichtung auch das Dichtungsprofil D3 gekürzt werden.

Eine Dichtung kann mit der Ablängvorrichtung beispielsweise wie folgt gekürzt werden:
Nachdem ein Bediener die Länge der gewünschten Dichtung an der Anzeige- und Bedienbaugruppe 2 eingegeben hat, kann eine Steuerung der Ablängvorrichtung A ermitteln, welche Dichtung D verwendet werden soll, um zu der gekürzten Dichtung zu kommen. Die ermittelte Dichtung D wird mittels der Anzeige- und Bedienbaugruppe 2 angezeigt. Der Wagen 41 wird die Position gefahren, in der der Anschlag 7 eine Entfernung von der Stelle hat, an welcher das Sägeblatt 51 die Dichtung D schneidet, die der Länge der eingelegten, zu kürzenden Dichtung D entspricht. Die erste und die zweite Spannbaugruppe 31, 32 sind geöffnet.

Die Steuerung öffnet nun die Hubtür 106 zum Arbeitsraum 104. Der Bediener legt so die Dichtung D in die erste und die zweite Spannbaugruppe 31, 32 ein, so dass das Gehäuse am Anschlag 7 anliegt. Die Breite und die Länger der eingelegten Dichtung D wird gemessen.

Anhand der Messergebnisse wird geprüft, ob die eingelegte Dichtung der von der Steuerung angeforderten Dichtung entspricht.

Dann schließt die Hubtür 106 und startet die weitere Bearbeitung. Der Schlitten 41 wird eine Position gefahren, in der der Anschlag 7 eine Entfernung von der Stelle hat, an der das Sägeblatt 51 schneidet, die durch die Länge der gewünschten Dichtung D vorgegeben ist.

Dann wird ein Funktionstest der Dichtung D durchgeführt. Dazu wird mittels der Betätigungsbaugruppe 8 die Dichtung D betätigt. Mittels der Positionsbaubaugruppe 9 wird die Dichtleiste D2 der betätigten Dichtung D in die für das Kürzen gewünschte Position gegenüber dem Gehäuse D1 verschoben. Gleichzeitig wird der Hub und die Gleichmäßigkeit der Bewegung der Dichtleiste D2 geprüft. Sollte es dabei Auffälligkeiten geben oder sollte die falsche Dichtung D eingelegt worden sein, wird die weitere Bearbeitung abgebrochen und der Bediener wird aufgefordert die Dichtung D zu entnehmen und eine neue Dichtung D einzulegen.

Dann wird die Dichtung D mittels der ersten, der zweiten und der dritten Spannbaugruppe 31, 32, 33 eingespannt.

Ergeben die Messungen und der Funktionstest, dass die Dichtung D in Ordnung ist, wird die Kreissäge 5 in Betrieb gesetzt. Der Schwenktisch 52 , auf dem der Motor der Säge 5 montiert wird, wird mittels des Linearantriebs 55 nach oben geschwenkt, so dass das Sägeblatt 51 von unten durch den dafür vorgesehenen Schlitz dringt. Das Sägeblatt 51 beginnt die Dichtung D zu kürzen und zwar das Gehäuse D1, die Halteleiste D2 und ggf. das Dichtungsprofil D3. Nach dem Kürzen der Dichtung D wird die Kreissäge 5 nach unten geschwenkt. Es wird ein erneuter Funktionstest durchgeführt. Die Spannbaugruppen 31, 32, 33 geben die Dichtung D frei, die Hubtür 106 öffnet sich und die Dichtung D kann entnommen werden.

Bezugszeichen:
- D: Dichtung
- A: Ablängvorrichtung

- 2: Anzeige- und Bedienbaugruppe

- 3: Spannbaugruppen
- 31: erste Spannbaugruppe
- 311: stationäre Spannbacke
- 312: bewegliche Spannbacke
- 32: zweite Spannbaugruppe
- 321: stationäre Spannbacke
- 322: bewegliche Spannbacke
- 33: dritte Spannbaugruppe
- 331: Stempel

- 4: Bewegungsbaugruppe
- 41: Wagen
- 42: Wellenführung
- 421: Führungswellen
- 422: Linearlager
- 43: Antrieb

- 5: Säge
- 51: Sägeblatt
- 52: Schwenktisch
- 53: Schwenklager
- 54: Gestell
- 55: Linearantrieb
- 56: Abdeckungen
- 57: Abdeckung
- 58: Auffangbehälter

- 6: Sensorbaugruppen
- 61: erste Sensorbaugruppe zum Messen der Breite der Dichtung
- 62: zweite Sensorbaugruppe zum Messen der Länge der Dichtung
- 63: Sensorbaugruppe zum Messen des Hubs an einem ersten Ende der Dichtung
- 64: Sensorbaugruppe zum Messen des Hubs an einem zweiten Ende der Dichtung

- 7: Anschlag

- 8: Betätigungsbaugruppe
- 81: Betätigungsstift

- 9: Positionsbaugruppe
- 91: Stift

- 10: Maschinenschrank
- 101: Schrankabteil für Steuerungsbaugruppen
- 102: Arbeitsraum
- 103: Schrankabteil unter dem Arbeitstisch
- 104: Arbeitstisch
- 105: Wände
- 106: Türen
- 11: Abzieh- und Aufziehbaugruppe
- 111: Greifmittel
- 112: Rollen und Scheiben
- 113: Mehrachsen-Robotor

- 12: Drucker
- 121: Druckkopf

- 13: Schneidbaugruppe
- 131: Messer
- 132: Schlitten
- 133: Abdeckung

## Patentansprüche

1. Ablängvorrichtung (A), insbesondere für automatische Dichtungen (D), mit
- einer ersten Spannbaugruppe (31) zum Einspannen eines Gehäuses (D1) einer Dichtung (D) im Bereich deren ersten Endes,
- einer zweiten Spannbaugruppe (32) zum Einspannen des Gehäuses (D1) der Dichtung (D) im Bereich deren zweiten Endes,
- mit einer Säge (5), zumindest zum Kürzen des Gehäuses (D1) der Dichtung (D1),
- wobei die zweite Spannbaugruppe (32) relativ zur ersten Spannbaugruppe (31) und zur Säge (5) linear verschiebbar ist,
**dadurch gekennzeichnet, dass**
- die Ablängvorrichtung (A) eine Schneidbaugruppe zum Schneiden des Dichtungsprofils einer eingelegten Dichtung aufweist.

2. Ablängvorrichtung (A) nach Anspruch 1, **dadurch gekennzeichnet, dass** die Ablängvorrichtung (A) eine erste Sensorbaugruppe (61) aufweist, mit welcher die Breite des Gehäuses (D1) einer in die Ablängvorrichtung (A) eingelegten Dichtung (D) erfassbar ist.

3. Ablängvorrichtung (A) nach Anspruch 1 oder 2, **dadurch gekennzeichnet, dass** die Ablängvorrichtung (A) eine zweite Sensorbaugruppe (62) aufweist, mit welcher die Länge des Gehäuses (D1) der in die Ablängvorrichtung (A) eingelegten Dichtung erfassbar ist.

4. Ablängvorrichtung (A) nach einem der Ansprüche 1 bis 3, **dadurch gekennzeichnet, dass** die Ablängvorrichtung (A) eine dritte Sensorbaugruppe (63) aufweist, mit welcher der Hub im Bereich eines ersten Endes einer in die Ablängvorrichtung (A) eingelegten automatischen Dichtung (D) erfassbar ist.

5. Ablängvorrichtung (A) nach einem der Ansprüche 1 bis 4, **dadurch gekennzeichnet, dass** die Ablängvorrichtung (A) eine Sensorbaugruppe (64) aufweist, mit welcher der Hub im Bereich eines zweiten Endes einer in die Ablängvorrichtung (A) eingelegten automatischen Dichtung (D) erfassbar ist.

6. Ablängvorrichtung (A) nach einem der Ansprüche 1 bis 5, **dadurch gekennzeichnet, dass** die Ablängvorrichtung (A) eine Betätigungsbaugruppe (8) aufweist, mit welcher eine in die Ablängvorrichtung (A) eingelegte automatische Dichtung betätigbar ist.

7. Ablängvorrichtung (A) nach einem der Ansprüche 1 bis 6, **dadurch gekennzeichnet, dass** die Ablängvorrichtung (A) eine Positionsbaugruppe (9) aufweist, mit welcher eine Dichtungsleiste (D2) einer in die Ablängvorrichtung (A) eingelegte automatische Dichtung (d) relativ zu deren Gehäuse (D1) positionierbar ist.

8. Ablängvorrichtung (A) nach einem der Ansprüche 1 bis 7, **dadurch gekennzeichnet, dass** die Ablängvorrichtung (A) eine Abzieh- und Aufziehbaugruppe (11) aufweist, mit welcher ein Dichtungsprofil (D3) von der übrigen eingelegten Dichtung (D) zumindest teilweise abgezogen und aufgezogen werden kann.

9. Ablängvorrichtung (A) nach einem der Ansprüche 1 bis 8,
**dadurch gekennzeichnet, dass** die Ablängvorrichtung (A) einen Drucker (12) aufweist, mit welchem das Gehäuse (D1) einer eingelegten Dichtung (D) bedruckbar ist.

10. Ablängvorrichtung (A) nach einem der Ansprüche 1 bis 9,
**dadurch gekennzeichnet, dass** die Ablängvorrichtung (A) eine dritte Spannbaugruppe aufweist, mit der das Gehäuse (D1) einer eingelegten Dichtung beidseitig eines Sägeblattes der Säge einspannbar ist.

11. Ablängvorrichtung (A) nach einem der Ansprüche 1 bis 10,
**dadurch gekennzeichnet, dass** die Ablängvorrichtung (A) eine Anzeige- und Bedienbaugruppe aufweist.

12. Ablängvorrichtung (A) nach einem der Ansprüche 1 bis 11,
**dadurch gekennzeichnet, dass** die Ablängvorrichtung (A) eine Steuerung aufweist, welche mit den übrigen Baugruppen verbunden ist, um von diesen Sensorsignale zu empfangen oder an die Steuerungssignale zu übermitteln.

13. Verfahren zum Kürzen einer in eine Ablängvorrichtung (A) nach einem der Ansprüche 1 bis 12 eingelegten Dichtung, insbesondere einer automatischen Dichtung, **gekennzeichnet durch** folgende Schritte,
- Einstellen des Abstandes der zweiten Spannbaugruppe von der ersten Spannbaugruppe und der Säge,
- Einspannen des Gehäuses der Dichtung mittels der ersten Spannbaugruppe und der zweiten Spannbaugruppe und
- Sägen der Dichtung mittels der Säge.

14. Verfahren nach Anspruch 13, **dadurch gekennzeichnet, dass** vor dem Sägen mittels zumindest einer der Sensorbaugruppen die Dichtung vermessen wird.

## Claims

1. Cutting device (A), in particular for automatic seals (D), having
- a first clamping assembly (31) for clamping a housing (D1) of a seal (D) in the region of the first end thereof,
- a second clamping assembly (32) for clamping the housing (D1) of the seal (D) in the region of the second end thereof,
- having a saw (5), at least for shortening the housing (D1) of the seal (D1),
- wherein the second clamping assembly (32) is linearly displaceable relative to the first clamping assembly (31) and to the saw (5),
**characterized in that**
- the cutting device (A) has a cutting assembly for cutting the seal profile of an inserted seal.

2. Cutting device (A) according to Claim 1, **characterized in that** the cutting device (A) has a first sensor assembly (61), with which the width of the housing (D1) of a seal (D) inserted into the cutting device (A) can be detected.

3. Cutting device (A) according to Claim 1 or 2, **characterized in that** the cutting device (A) has a second sensor assembly (62), with which the length of the housing (D1) of the seal inserted into the cutting device (A) can be detected.

4. Cutting device (A) according to one of Claims 1 to 3, **characterized in that** the cutting device (A) has a third sensor assembly (63), with which the displacement in the region of a first end of an automatic seal (D) inserted into the cutting device (A) can be detected.

5. Cutting device (A) according to one of Claims 1 to 4, **characterized in that** the cutting device (A) has a sensor assembly (64), with which the displacement in the region of a second end of an automatic seal (D) inserted into the cutting device (A) can be detected.

6. Cutting device (A) according to one of Claims 1 to 5, **characterized in that** the cutting device (A) has an actuating assembly (8), with which an automatic seal inserted into the cutting device (A) can be actuated.

7. Cutting device (A) according to one of Claims 1 to 6, **characterized in that** the cutting device (A) has a positioning assembly (9), with which a sealing strip (D2) of an automatic seal (d) inserted into the cutting device (A) can be positioned relative to the housing (D1) thereof.

8. Cutting device (A) according to one of Claims 1 to 7, **characterized in that** the cutting device (A) has a pull-off and pull-on assembly (11), with which a seal profile (D3) can be at least partially pulled off and pulled on from the remaining inserted seal (D).

9. Cutting device (A) according to one of Claims 1 to 8, **characterized in that** the cutting device (A) has a printer (12), with which the housing (D1) of an inserted seal (D) can be printed.

10. Cutting device (A) according to one of Claims 1 to 9, **characterized in that** the cutting device (A) has a third clamping assembly, with which the housing (D1) of an inserted seal can be clamped on both sides of a saw blade of the saw.

11. Cutting device (A) according to one of Claims 1 to 10, **characterized in that** the cutting device (A) has a display and operating assembly.

12. Cutting device (A) according to one of Claims 1 to 11, **characterized in that** the cutting device (A) has a control, which is connected to the remaining assemblies in order to receive sensor signals from them or to transmit control signals to them.

13. Method for shortening a seal, in particular an automatic seal, inserted into a cutting device (A) according to one of Claims 1 to 12, **characterized by** the following steps,
- setting the distance of the second clamping assembly from the first clamping assembly and the saw,
- clamping the housing of the seal by means of the first clamping assembly and the second clamping assembly, and
- sawing the seal by means of the saw.

14. Method according to Claim 13, **characterized in that** the seal is measured by means of at least one of the sensor assemblies before the sawing.

## Revendications

1. Dispositif de coupe à longueur (A), en particulier pour des joints d'étanchéité automatiques (D), comprenant
- un premier ensemble de serrage (31) pour serrer un boîtier (D1) d'un joint d'étanchéité (D) dans la région de sa première extrémité,
- un deuxième ensemble de serrage (32) pour serrer le boîtier (D1) du joint d'étanchéité (D) dans la région de sa deuxième extrémité,
- comprenant une scie (5), au moins pour raccourcir le boîtier (D1) du joint d'étanchéité (D1),
- le deuxième ensemble de serrage (32) pouvant être déplacé linéairement par rapport au premier ensemble de serrage (31) et à la scie (5),
**caractérisé en ce que**
- le dispositif de coupe à longueur (A) présente un ensemble de coupe pour couper le profil de joint d'étanchéité d'un joint d'étanchéité inséré.

2. Dispositif de coupe à longueur (A) selon la revendication 1, **caractérisé en ce que** le dispositif de coupe à longueur (A) présente un premier ensemble de capteur (61), avec lequel la largeur du boîtier (D1) d'un joint d'étanchéité (D) inséré dans le dispositif de coupe à longueur (A) peut être détectée.

3. Dispositif de coupe à longueur (A) selon la revendication 1 ou 2, **caractérisé en ce que** le dispositif de coupe à longueur (A) présente un deuxième ensemble de capteur (62), avec lequel la longueur du boîtier (D1) du joint d'étanchéité inséré dans le dispositif de coupe à longueur (A) peut être détectée.

4. Dispositif de coupe à longueur (A) selon l'une quelconque des revendications 1 à 3, **caractérisé en ce que** le dispositif de coupe à longueur (A) présente un troisième ensemble de capteur (63), avec lequel la course dans la région d'une première extrémité d'un joint d'étanchéité automatique (D) inséré dans le dispositif de coupe à longueur (A) peut être détectée.

5. Dispositif de coupe à longueur (A) selon l'une quelconque des revendications 1 à 4, **caractérisé en ce que** le dispositif de coupe à longueur (A) présente un ensemble de capteur (64), avec lequel la course dans la région d'une deuxième extrémité d'un joint d'étanchéité automatique (D) inséré dans le dispositif de coupe à longueur (A) peut être détectée.

6. Dispositif de coupe à longueur (A) selon l'une quelconque des revendications 1 à 5, **caractérisé en ce que** le dispositif de coupe à longueur (A) présente un ensemble d'actionnement (8), avec lequel un joint d'étanchéité automatique inséré dans le dispositif de coupe à longueur (A) peut être actionné.

7. Dispositif de coupe à longueur (A) selon l'une quelconque des revendications 1 à 6, **caractérisé en ce que** le dispositif de coupe à longueur (A) présente un ensemble de positionnement (9), avec lequel une baguette de joint d'étanchéité (D2) d'un joint d'étanchéité automatique (d) inséré dans le dispositif de coupe à longueur (A) peut être positionnée par rapport à son boîtier (D1).

8. Dispositif de coupe à longueur (A) selon l'une quelconque des revendications 1 à 7, **caractérisé en ce que** le dispositif de coupe à longueur (A) présente un ensemble de retrait et de montage (11), avec lequel un profil de joint d'étanchéité (D3) peut être retiré et monté au moins en partie du reste du joint d'étanchéité (D) inséré.

9. Dispositif de coupe à longueur (A) selon l'une quelconque des revendications 1 à 8, **caractérisé en ce que** le dispositif de coupe à longueur (A) présente une imprimante (12), avec laquelle le boîtier (D1) d'un joint d'étanchéité (D) inséré peut être imprimé.

10. Dispositif de coupe à longueur (A) selon l'une quelconque des revendications 1 à 9, **caractérisé en ce que** le dispositif de coupe à longueur (A) présente un troisième ensemble de serrage, avec lequel le boîtier (D1) d'un joint d'étanchéité inséré peut être serré des deux côtés d'une lame de scie de la scie.

11. Dispositif de coupe à longueur (A) selon l'une quelconque des revendications 1 à 10, **caractérisé en ce que** le dispositif de coupe à longueur (A) présente un ensemble d'affichage et de commande.

12. Dispositif de coupe à longueur (A) selon l'une quelconque des revendications 1 à 11, **caractérisé en ce que** le dispositif de coupe à longueur (A) présente une commande, qui est reliée aux autres ensembles, afin de recevoir de ceux-ci des signaux de capteur ou de transmettre à ceux-ci des signaux de commande.

13. Procédé pour raccourcir un joint d'étanchéité inséré dans un dispositif de coupe à longueur (A) selon l'une quelconque des revendications 1 à 12, en particulier un joint d'étanchéité automatique, **caractérisé par** les étapes suivantes,
- ajustement de la distance du deuxième ensemble de serrage par rapport au premier ensemble de serrage et à la scie,
- serrage du boîtier du joint d'étanchéité au moyen du premier ensemble de serrage et du deuxième ensemble de serrage et
- sciage du joint d'étanchéité au moyen de la scie.

14. Procédé selon la revendication 13, **caractérisé en ce que** le joint d'étanchéité est mesuré avant le sciage au moyen d'au moins un des ensembles de capteur.
